Europäisches Patentamt

European Patent Office

Office européen des brevets

(19)

(11) **EP 1 376 966 A2**

(12) **EUROPEAN PATENT APPLICATION**

(43) Date of publication:
**02.01.2004  Bulletin 2004/01**

(51) Int Cl.$^7$: **H04L 25/05**, H04J 3/06

(21) Application number: **03076722.2**

(22) Date of filing: **03.06.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority:  **04.06.2002  IL   15001102**<br><br>(71) Applicant: **ECI Telecom Ltd.**<br>**Petach Tikva 49517 (IL)** | (72) Inventors:<br>• **Ruthstein, Jacob**<br>**49573 Petach-Tikva (IL)**<br>• **Litinsky, Lev**<br>**59205 Bat-Yam (IL)**<br>• **Viks, Amihai**<br>**52536 Ramat-Gan (IL)**<br><br>(74) Representative: **Curell Sunol, Jorge et al**<br>**c/o Dr. Ing. M. Curell Sunol I.I. S.L.**<br>**Passeig de Gràcia 65 bis**<br>**08008 Barcelona (ES)** |

(54)    **Enable pulse generator and method of mapping data using this generator**

(57)    The invention discloses a cyclic generator of enabling/disabling signals (EG) adapted to convert an incoming data stream having a bit rate R1 into an outgoing data stream having a bit rate R2, wherein R1 $\cong$ mR2/n , m<n , m and n - integers being parameters of said EG selected to provide m enable signals per n clocks of the bit rate R2, wherein the EG is characterized by having a number of internal states ≤n and being capable of generating periodic enabling/disabling output signals such that the disable signals are optimally distributed among the enable signals. Also, there is disclosed a method of low-jitter mapping of the incoming data stream having a bit rate R1, into a succession of data frames of an outgoing data stream having a higher bit rate, wherein each of the frames comprises an overhead portion and a payload portion; the method comprises using the cyclic generator of enable/disable signals (EG) to control filling the payload portion of each data frame of the outgoing data stream with information bits of the incoming data stream diluted with stuffing bits, wherein the filling is performed at the bit rate R2, R1 $\cong$ mR2/n, m<n, m and n are integers. The method comprises using at least one predetermined location in the overhead portion of at least one of the data frames to indicate an internal state of the EG corresponding to a suitable payload portion, for further de-mapping of that portion.

FIG.2

**EP 1 376 966 A2**

## Description

## Field of the invention

The present invention relates to a method of converting a lower bit rate data stream into a higher bit rate data stream with a low jitter, and to this end, to a method of mapping, and to systems utilizing the methods.

## Background of the invention

Converting a lower bit rate data stream incoming a converter, into a higher bit rate data stream outgoing the converter, is usually provided by inserting between binary words of the incoming lower rate data stream so-called "silent" binary words which fill extra positions not carrying information in the outgoing higher rate data stream. The "silent" portions are usually provided by temporary disabling transmission of information bits of the incoming data stream.

The presence of such "silent" positions in the real data create a so-called jitter effect which shows itself as sharp undesired changes in the frequency and amplitude of the "netto" information when filtered from the outgoing signal. Long and unequal time distances between the "silent" positions in the outgoing data stream degrade the quality of transmission.

US patent 6,226,661 teaches one method of obtaining distributed jitter in sample rate conversion, and describes a technique of converting bit rates using binary ratios to express bit rates relation. The method requires complex calculations and compensation of phase differences introduced by the converter.

To the best of the Applicant's knowledge, no simple practical solutions are described in the prior art to obtain low jitter bit rate conversions, which would enable conversion of any bit rate to a required one by easy adjusting the converter.

Also, no methods are described, which would propose a low jitter mapping of a low bit rate data stream into a high bit rate data stream.

## Object of the invention

It is therefore an object of the present invention to provide a simple technique of enabling/disabling signals generation to ensure low jitter transmission of an incoming lower rate data stream by an outgoing higher rate data stream, and a technique of mapping using such an enable generator.

## Summary of the invention

There is firstly proposed a cyclic generator of enabling/disabling signals (Enable Generator - EG) suitable for converting an incoming data stream with a bit rate R1 into an outgoing data stream with a higher bit rate R2, wherein $R1 \cong mR2/n$ , $m<n$ , m and n - integers, the EG having a number of internal states $\leq n$ and being capable of generating periodic enabling/disabling output signals such that the disable signals are optimally distributed among the enable signals.

The integers m and n are the EG parameters selected so as to provide m enable signals for n clocks of the bit rate R2. The meaning "clocks" is to be understood herein as time intervals between periodic, accurately spaced synchronization signals serving a particular bit rate. Depending on a particular implementation, one or more bits of information can be transmitted per one clock (said time interval).

It should be mentioned, however, that sometimes in the specification the term "clock" is used in the meaning of a synchronization frequency proportional to a particular bit rate.

It will further be shown that the parameters m, n can also be adjustable to maintain stable, error free bit rate conversion.

In other words, the EG disable signals occur between the EG enable signals with a minimal periodicity, so that the single disable signals are almost uniformly distributed between the enable ones.

It should be noted that the disable signal can be either a preselected signal different from the enable signal, or (preferably) just an absence of the enable signal in the predetermined timing.

In the most preferred embodiment, the EG, to ensure the above requirement, is capable of generating enabling/disabling signals according to the following rules:

a) selecting an initial state S of the generator, $S \leq n$ ;
b) at a clock of bit rate R2 of the outgoing data stream, obtaining a current state of the generator S' = S + m
c) if $S' \geq n$ , enabling transmission of a bit from data of the incoming data stream, and replacing the current state S' with (S'- n);
    if $S' < n$ , disabling transmission of a bit of the incoming data stream, without changing the current state S',
d) at the next clock, repeating from step b, while using the current state as a new initial state.

Mathematically, the above algorithm can be written down as the following two operations, taking place per one clock of the R2 bit rate:

$$E = (S+m)\,div\,n$$

$$S = (S+m)\,mod\,n$$

The generator as described above can be used in various cases of data transmission.

A simple idea of selecting m and n parameters of the EG to convert an incoming data stream having a bit rate R1 to an outgoing data stream having a bit rate R2 allows using one common internal bit rate (clock) R2 in a chip handling at its inputs a number of incoming data streams with respective different bit rates R1', R1"... and outputting one or more outgoing data streams respectively having these same bit rates R1', R1".... or bit rates derived therefrom (say, multiples thereof). To implement this idea, at least at the inputs of the chip, respective differently adjusted EG generators are provided each cooperating with a FIFO, to convert the incoming data streams' bit rates into the common internal bit rate R2, so that the core of the chip operates at said common internal bit rate R2.

For example, a chip of this type may be required for implementing such network elements as regenerators, transponders, or the like.

Preferably, a particular input FIFO can be used for storing data inputted at the bit rate (clock) R1, the corresponding EG can be used for creating enable-disable signals which are used a) for reading the FIFO at the clock R2 thus creating an internal data stream at the clock R2, and b) for transmitting a corresponding internal stream of the enabling/disabling signals in parallel with the internal data stream. Both these internal streams can be transformed in the chip for handling the particular incoming data stream, and finally utilized at the corresponding output for creating the outgoing data stream at the clock R1 or kR1. The number of outgoing data streams may be unequal to the number of incoming data streams.

The proposed EG also allows suggesting a new method of low-jitter mapping of an incoming (client's) data stream, into a succession of data frames of an outgoing data stream having a higher bit rate, wherein each of the frames comprises an overhead portion and a payload portion, the method comprises:

> using a first cyclic generator of enable/disable signals (EG) as described above, to control filling the payload portion of each data frame of the outgoing data stream with information bits of the incoming data stream diluted with stuffing bits, wherein the filling is performed at the bit rate R2, the incoming data stream has the bit rate R1, and R1 $\cong$ mR2/n, m<n, m and n are integers;
> using at least one predetermined location in the overhead portion of at least one of said data frames to indicate an internal state of the EG corresponding to a suitable payload portion, for further de-mapping of said portion.

The filling of the payload is performed by inserting the information bits when the EG generates enable signals, and inserting stuffing bits when the EG does not generate enable signals.

The high bit rate outgoing data stream can be, for example, one of standard data streams belonging to well known telecommunication technologies such as SDH, SONET, OTN, PDH.

For example, the predetermined location (S-location) may constitute any non-specified overhead byte in the first frame. The information in such a byte, whenever is read at a receiving site, serves as a de-mapping key i.e., informs a de-mapper about the internal state of the first EG at which the mapping of the first frame payload was started. Position of the S-location in the overhead may correspond to a particular payload bit, or row of the first frame from which the mapping started. Actually, the state may be transmitted once and be used up to any random fault distresses the system. After a fault, the state must be refreshed. So, in the absence of faults, the EG internal state may be transmitted only once. However, it may be transmitted each frame, or even several times per one frame if so desired, either for confirming the initial internal state or for updating a current internal state.

In other words, the above-described method of low-jitter mapping is logically followed by de-mapping at a receiving end with the aid of a second EG identical to the first EG, wherein the de-mapping comprises:

> adjusting the second EG to have parameters m and n respectively identical to said parameters of the first EG,
> obtaining (reading) the internal state of the first EG from said predetermined location of the overhead portion of one of said frames and
> setting the second EG into the obtained internal state,
> using the second EG to read the incoming data stream, from the payload portion corresponding to the internal state, at the bit rate R1.

The mapping may be a so-called synchronous mapping, wherein the parameters m and n are respectively constant and known in advance. In other words, m and n are known in advance both at a transmitting side and at the receiver side, and both the first EG and the second EG can be adjusted for the whole transmission session.

In practice, the mapping is usually performed when both R1 and R2 may slightly change, so the m/n ratio is not constant. In this case, there is proposed a method of asynchronous mapping, wherein the ratio m/n $\neq$ const, the method further comprising
monitoring ratio between the bit rates R1 and R2 (by monitoring depth of the FIFO)
periodically adjusting the ratio m/n to $(m/n)_t$ in the first EG generator according to the current ratio between R1 and R2, and
for further de-mapping, simultaneously indicating in a predetermined location of the overhead portions of the data frames, information enabling obtaining the adjusted ratio $(m/n)_t$ actual for a particular period of transmission.

The above method enables regulating the mapping by using a current $(m/n)_t$ up to a new adjusted ratio $(m/n)_t$ is obtained.

To maintain the bit rate R2 constant in conditions when R1 and/or R2 drift from their initial values, at least one of the current actual parameters n, m is to be updated thereby adjusting the ratio $(m/n)_t$ .

The indication of such an adjustment can be performed by inserting current binary values of m, n in predetermined places of the overhead portion of the data frames of the outgoing data stream at a pre-determined moment of time, for obtaining $(m/n)_t$ at the receiving site.

The step of de-mapping at the receiving site, preferably, will further comprise reading the updated parameters m and n from the overhead portion of a frame and adjusting the second EG to the obtained parameters m, n up to receiving newly updated said parameters.

The above-described methods suppose using relatively simple and easily modified means for converting an incoming data stream having an arbitrary bit rate, into a higher bit rate outgoing data stream.
Owing to that, the same concept may be applied for enveloping and transmitting a number of client's data streams via a high rate transport data stream while preserving the advantage of low jitter.

Therefore, a method is further provided for transporting, with a low jitter, "k" incoming data streams having arbitrary bit rates, by "k" SONET/SDH lower order data streams further multiplexed into a SONET/SDH higher order data stream, the method comprising mapping each of said incoming data streams into a corresponding lower order SDH/SONET data stream according to the above-described mapping methods, and multiplexing the obtained "k" lower order SONET/SDH data streams into the higher order transport data stream using a bit-interleaving principle.

There are also proposed suitable systems for low jitter mapping and a system for low jitter data transport which will be described below.

**Brief description of the drawings**

Fig. 1a - is a diagram schematically illustrating the principle of the proposed generator of enable/disable signals (EG).
Fig. 1b - is a flow-chart of the EG.
Fig. 1c - is an exemplary table illustrating transitions between internal states of the EG, and output enabling signals.
Fig. 2 - is a block-diagram of a system schematically illustrating a mapping/de-mapping principle using the proposed EG.
Fig. 3 - is a modified diagram showing how asynchronous mapping can be implemented.

Fig. 4 - is a schematic block diagram illustrating the transmission of a number of incoming data streams using one transport data stream and the above-described mapping/de-mapping principle.
Fig. 5 - is a schematic block diagram illustrating a system handling a number of incoming and outgoing streams having different clocks, while utilizing a common internal clock inside the system.

**Detailed description of the invention**

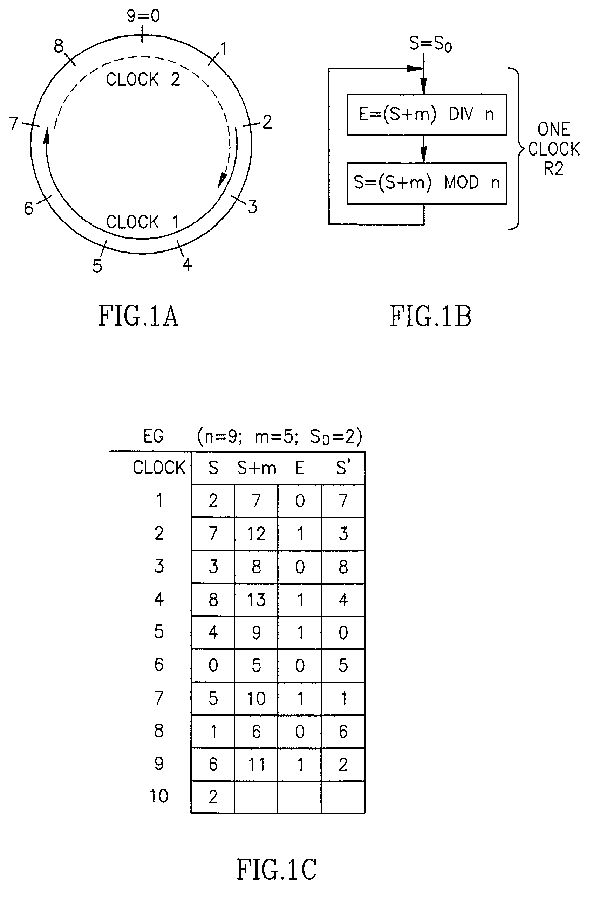

Fig. 1a schematically illustrates a circular diagram of the proposed cyclic enable generator (EG). The function of the EG is to generate enable/disable signals for reading data incoming (say, a FIFO)
with an arbitrary client bitrate R1, at another bit rate - for example, to allow further transmittion of this data with this another bitrate R2, wherein $R1 = mR2 /n$ ( R2, for example, is any selected SDH rate), wherein both $m$ and $n$ are integers and $m<n$. The meaning of the ratio is that for each $n$ clocks of the enable generator EG (i.e., for each $n$ clocks of R2) there will be $m$ clocks with enabling signals to transform the bit rate R1 into bitrate R2.
Fig. la illustrates the diagram for an exemplary case where n=9, m=5.
To begin its operation, the generator EG defines an initial state (condition) S within a cycle being $n$ clocks, at each clock the generator changes the state so that S' $= S+m$,
and acts as follows:
$if S' \geq n$ , a bit from the incoming data is transmitted (ENABLED), and the condition S' replaced by $S'- n =S+m-n;$
$if S' < n$ , no bit of the incoming data is transmitted (DISABLED), and the condition S' remains the same.
The mathematically written algorithm is illustrated in Fig. 1b, and is performed by the EG at each clock of R2 bit rate:

$$E = (S+m) \ div \ n,$$

$$S' = (S+m) \ mod \ n.$$

Let S =2. In the table, shown in **Fig. 1c**, one may see that the disabling signals are maximally uniformly distributed among the enabling ones. It should be noted that the EG of this particular example has nine different internal states, i.e., as many as the number "n" of clocks.
However, the number of different internal states may be less than "n", i.e. the EG may not pass some specific states.
How the numbers $m$ and $n$ are selected in real schemes? Naturally, the ratio of real bit rates $R1/R2$ can be obtained since the real bit rates are known. According to the above equation, $R1/R2 = m/n$. If one of the parameters (say, n) is selected, the other parameter m, with a particular accuracy, can be found as $m = (R1/R2)$

*n.* In real EG schemes, n can be selected to be $10^6$ or even more, the values n and m are preferably held in binary registers (the structure of EG is not shown). Accuracy of the proposed EG can be set in advance by selecting the length of binary registers assigned for the parameters "m" and "n". For example, registers of 20 bits enable representing numbers in the order of millions, and allow converting bitrates differing in small values with a mistake close to $\pm$ 0.5 single PPM values (i. e., values expressing bitrate changes of 0 to 0.5 Pulses Per Million). For example, the PPM required for bit rates in SDH networks should not exceed $\pm$ 4.6 PPM. Therefore, the mentioned length of the EG registers is sufficiently accurate for SDH applications.

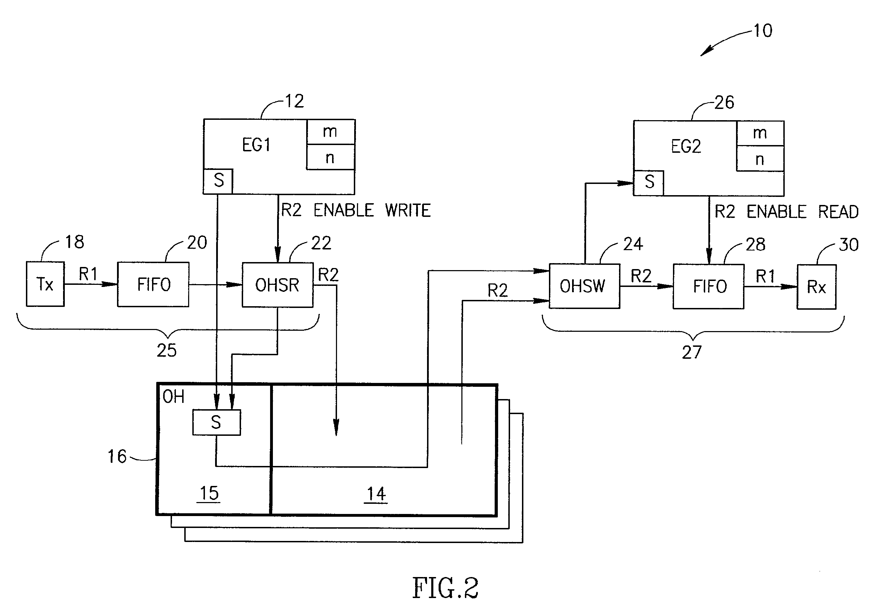

**Fig. 2** schematically illustrates a system 10 where a first enable generator EG1 marked 12 is used for mapping a data stream having bitrate R1 into informational payloads 14 of frames 16, with a bit rate R2. The frames 16 (for example, SDH frames each comprising a payload portion 14 and an overhead portion 15) are transmitted from a transmitter site 25 to a receiver site 27. The transmitter site comprises a transmitter Tx 18, a FIFO 20, EG1 12 and a circuit 22 which will be called an overhead synchronized reader (OHSR). The receiver site 27 symmetrically comprises an overhead synchronized writer OHSW 24, a second enable generator EG2 marked 26, a FIFO 28 and a receiver 30.

Enable generators 12 and 26 are identical. Fig. 2 illustrates a version of synchronous mapping, i.e., such where the parameters m, n themselves, and the ratio m/n are preset and constant. The generators 12 and 26 are preliminarily adjusted to the required ratio between the bit rates R1 and R2, by setting registers m and n therein. Such a mapping can be utilized when the R1 and R2 are synchronized in advance, for example created by one and the same source, say R2 is created by a PLL circuit from R1. Using the enable generator 12 capable of uniformly diluting enable signals with disable signals, the mapping can be provided with a very low and, most important, distributed jitter. Exact algorithm of the EG may vary. The frame 16 is formed from the data stored in the FIFO 20 by combined action of the EG1 and OHSR. The function of OHSR is to distinguish between the overhead and payload portions of the frame and to ensure insertion of an initial state S of the EG1 in a predetermined location 32 of the overhead 15. Further, when the OHSR declares a payload zone, and the EG1 gives an enable write signal, the payload 14 will be filled by data from the FIFO periodically stuffed at those positions which correspond to disable signals of the EG1. By doing this, the distributed stuffing is provided, which results in the controlled distributed jitter.

To enable further de-mapping data from the frame 16 and the following frames, and re-conversion thereof into the bit rate R1, indication of the S corresponding to the mapping pattern should be found in at least one of the frames arriving to the receiving site. This indication is allocated by OHSW, forwarded to the EG2 (26) and stored in it, so as to ensure that EG2 will start operating beginning from the state S. The payload portion of the frame 16 is detected by the OHSW 24 and written into FIFO 28 as is, with the rate R2. The EG2 (26) will enable reading only the data "netto" from FIFO 28, since it starts operating from the state S and uses the same values of the m,n parameters. The data "netto" without stuffing will therefore be read from the FIFO 28 and transmitted to the receiver 30 with the bit rate R1.

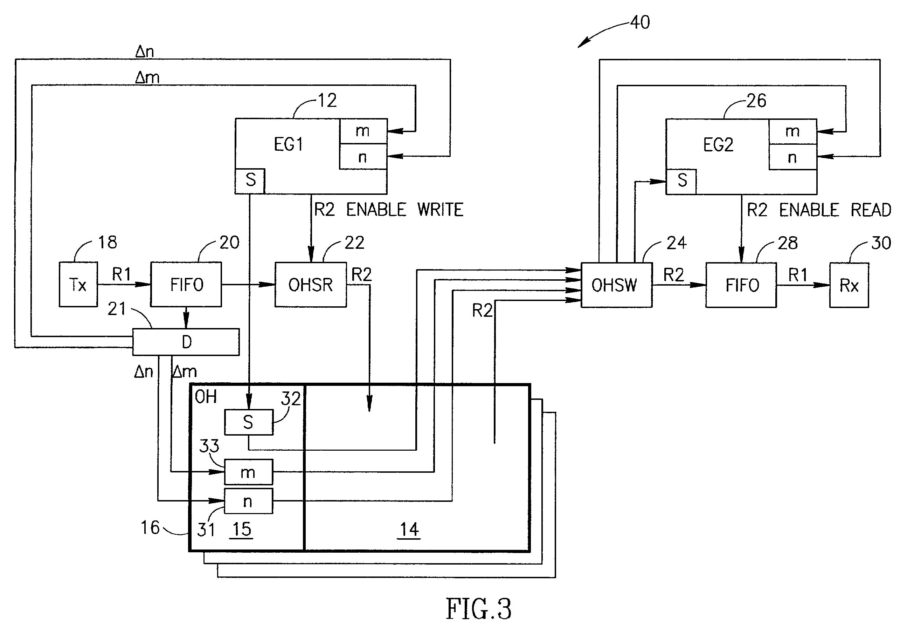

**Fig. 3** illustrates a modified system 40 suitable for a case of asynchronous mapping (m/n $\neq$ const). Such a mapping can be useful where one or both of the bit rates R1, R2 vary in time, to avoid errors in converting the data. When the real ratio between the bit rates changes, FIFO 20 may suffer from the following two critical conditions. A critical condition of the approaching overflow of the FIFO would appear if the bit rate R1 increases/ bit rate R2 decreases, and a critical condition of fast emptying of the FIFO occurs from the opposite reasons. These conditions can be detected by a detector D (21) of the FIFO depth.

To overcome this problem without creating errors, the mapping mechanism should be adjusted and therefore it inevitably becomes asynchronous.

The asynchronous mapping suggests adjusting the m/ n ratio from time to time, based on monitoring the FIFO condition. By doing this, the output (R2) bit rate can be maintained constant.

For example, the EG generator 20 may slightly reduce the rate of emptying the FIFO, if the FIFO is close to emptying, so "m" can be reduced. And vise versa. The generator may be adjusted from the point of m, from the point of n, or both.

Whenever either of the parameters m, n are updated in a transmitted frame and in the enabling generator at the transmitting site, the de-mapping site should be informed about it, too. It will happen if the receiving site is informed in advance, what are the places in the OH area where the updated information on m,n appears and what is the time to update the enabling generator after that. To do that, the Inventors propose indicating the changed parameter(s) in pre-set locations 31, 33 of the overhead portion of the transmitted data stream. This information enables obtaining the adjusted ratio $(m/n)_t$ actual for a particular period of transmission for further de-mapping.

To provide de-mapping at the receiving site, the OHSW 24 should detect the presence of updating information on *m* and/or *n* in the pre-set locations 31, 33 of the frame overhead, and forward it to the EG2 (26) together with the information on S in the location 32. The EG 26 will therefore be adjusted to de-map the suitable portion of data according to the updated ratio $(m/n)_t$. The EG 12 and EG 26 will work according to the updated conditions up to the ratio is changed due to any new fluctuations in the bit rates R1 and/or R2.

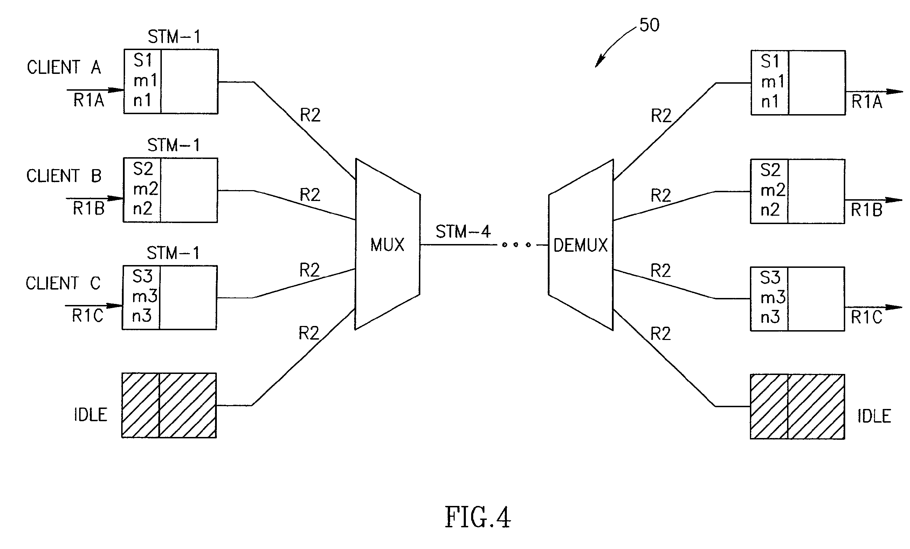

**Fig. 4** shows that the mapping principle mentioned above can be used for "packing" a number of lower rate data streams into a higher rate data stream, while preserving the advantage of distributed stuffing (and jitter). In a system 50, three lower rate data streams from clients A,B and C having respective rates R1A, R1B, R1C, are mapped into three STM-1 SDH data streams, all having a standard SDH rate (R2). Each of the three left side parallel branches of the system is provided with its own EG (not shown) set for its own combination of the parameters m and n. Each of the STM-1 data streams carries data supplied by the corresponding lower rate data stream. In this example, every STM-1 frame also carries information S on the state of the corresponding EG and information on the parameters m and n or their change. This information is indicated in predetermined locations of the overhead of the standard STM-1 frame. These locations may be different for different data streams R1A, R1B, R1C, but form the point of modularity of the systems they are preferably the same.

Four STM-1 streams may further be multiplexed into one STM-4 high order data stream. Out of the four STM-1 streams, three STM-1s respectively comprising the data of R1A, R1B, R1C will be used. The remaining fourth STM-1 may comprise any data to be transmitted via the same SDH transmitting line with the bit rate R2. In this particular example, this stream is idle, i.e. comprises all stuffing bits.

Owing to the bit-interleaving principle of multiplexing, the information comprised in all four STM-1 streams will be uniformly mixed in the STM-4 data stream and thereby the jitter will remain uniform even in case the fourth (stranger) data stream comprises only stuffing bits.

The obtained STM-4 data stream will be finally de-multiplexed at the receiving site, upon which each relevant STM-1 stream can be demapped using information on the suitable S, m, n preserved in the overhead of the STM-1 frames, and utilizing the corresponding EG (not shown) which is to be set according to the received S, m and n.

The advantage of such a mapping is that one may, using a modular and easily adjustable equipment, combine a number of data streams having different non-standard bit rates into one higher rate transport data stream.

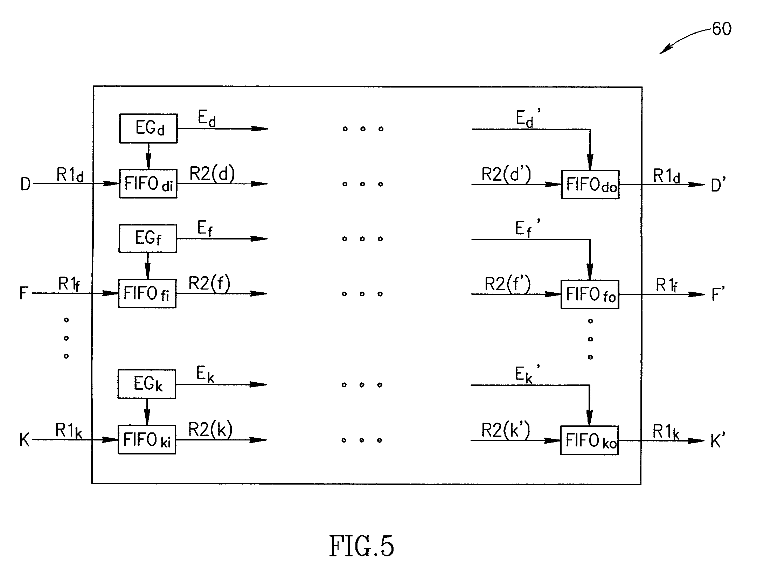

**Fig. 5** schematically illustrates a chip 60 intended for handling a number of incoming data streams D, F, ...K having different bit rates (clocks) R1d, R1f, ... R1k. In the chip, each of the incoming data streams (say, a stream symbolically called I with the bit rate R1i) is converted, using a corresponding input FIFO(ii) and a corresponding enable generator EG(i), into a) an internal data stream having the internal clock R2 carrying data (i) and thus marked R2i and b) an internal stream of enable/disable signals marked E( i ). It should be noted that, for maintaining the stable conversion, the FIFO depth can be monitored similarly to the manner illustrated in Fig. 3, and parameters m, n of the enable generator EGi can be adjusted accordingly. In the chip, the mentioned internal streams can be modified owing to handling the incoming data streams: for example, performing for them a FEC (Forward Error Correction) operation, overhead processing, and the like. Such operations may change the internal enable data stream and, consequently, a pattern of the parallel internal data stream. When outputting the processed data stream, the modified internal data stream Ri' can be written into a corresponding output FIFO (io) using its parallel internal enable data stream Ei'. From the FIFO (io), information can be outputted at the initial bit rate (clock) R1i, thus forming the output data stream I'. In this drawing, the outgoing data streams are shown fully symmetric to the incoming data streams, both from the point of their quantity and their output clocks. The system 60 can serve, for example, as a network regenerator for a number of data streams. However, the system (a chip) can be designed to output a number of outgoing data streams non equal to the number of incoming data streams. Moreover, the outgoing data streams may have clocks derived from the clocks of the respective incoming data streams, for example as it takes place in optical transponders.

It should be appreciated that, in the frame of the inventive concept, other implementations of the enabling generator can be found and various modifications of the mapping-demapping technique, as well as of a chip utilizing a common internal clock can be proposed, which should all be considered parts of the invention.

## Claims

1. A cyclic generator of enabling/disabling signals (EG) adapted to convert an incoming data stream having a bit rate R1 into an outgoing data stream having a bit rate R2, wherein $R1 \cong mR2/n$ , m<n , m and n - integers being parameters of said EG selected to provide m enable signals per n clocks of the bit rate R2,

wherein the EG is **characterized by** having a number of internal states ≤n and being capable of generating periodic enabling/disabling output signals such that the disable signals are optimally distributed among the enable signals.

2. The generator according to Claim 1, being capable of generating enabling/disabling signals according to the following rules:

    a) selecting an initial state S of the generator, S≤n ;
    b) at a clock of the bit rate of the outgoing data stream, obtaining a current state of the generator S' = S + m
    c) *if* $S' \geq n$ *,* enabling transmission of a bit from data of the incoming data stream, and replacing the current state *S'* with *(S'- n);*
       if *S' < n ,* disabling transmission of a bit of the incoming data stream, without changing the current state S',

d) at the next clock, repeating from step b) while using the current state as a new initial state.

**3.** A method of low-jitter mapping of an incoming data stream having a bit rate R1, into a succession of data frames of an outgoing data stream having a higher bit rate, wherein each of the frames comprises an overhead portion and a payload portion, the method comprises:

using a first cyclic generator of enable/disable signals (EG) according to Claim 1 or 2, to control filling the payload portion of each data frame of the outgoing data stream with information bits of the incoming data stream diluted with stuffing bits, wherein the filling is performed at the bit rate R2, $R1 \cong mR2/n$, m<n, m and n are integers;

using at least one predetermined location in the overhead portion of at least one of said data frames to indicate an internal state of the EG corresponding to a suitable payload portion, for further de-mapping of said portion.

**4.** The method of low-jitter mapping according to Claim 3, followed by a step of de-mapping at a receiving end with the aid of a second EG identical to the first EG, wherein the de-mapping step comprises:

adjusting the second EG to have parameters m and n respectively identical to said parameters of the first EG,

obtaining the internal state of EG from said predetermined location of the overhead portion of one of said frames and setting the second EG into the obtained internal state,

using the second EG to read the incoming data stream, from the payload portion corresponding to the internal state, at the bit rate R1.

**5.** The method according to Claim 3 or 4 wherein the parameters m and n are respectively constant and known in advance, the method serving for synchronous mapping.

**6.** The method according to Claim 3 or 4, wherein the ratio m/n ≠const, the method serving for asynchronous mapping and further comprising:

monitoring ratio between the bit rates R1 and R2,

periodically adjusting the ratio m/n and obtaining $(m/n)_t$, and

for further de-mapping, simultaneously indicating, in a predetermined location of the overhead portion of the data frames, information enabling obtaining the adjusted ratio $(m/n)_t$ actual for a

particular period of transmission.

**7.** The method according to Claim 6, wherein the indicating is performed by inserting current binary values of m, n in the overhead portion of the data frames of the outgoing data stream, for obtaining $(m/n)_t$ at the receiving site.

**8.** A method for transporting, with a low jitter, "k" incoming data streams having arbitrary bit rates, by "k" SONET/SDH lower order data streams for further multiplexing into a SONET/SDH higher order data stream, the method comprising:

mapping each of said incoming data streams into a corresponding lower order SDH/SONET data stream according to the methods of any one of Claims 3 to 7, and

multiplexing the obtained "k" lower order SONET/SDH data streams into said higher order data stream using a bit-interleaving principle.

**9.** A system for low jitter mapping of an incoming data stream having a bit rate R1, into a succession of data frames of an outgoing data stream having a higher bit rate, capable of performing the method according to any one of Claims 3 to 7.

**10.** A system for low jitter data transmission, capable of performing the method according to Claim 8.

**12.** A system for handling a number of incoming data streams with respective different bit rates R1a, R1i...R1k at its inputs and outputting one or more outgoing data streams at its outputs, respectively having the same bit rates R1a, R1i....R1k or bit rates derived therefrom, by utilizing inside the system one common internal bit rate R2; the system being **characterized in that** it comprises, at least at its inputs, a number of EG for respectively converting said incoming data streams to the internal bit rate R2, each of said EG being designed according to Claim 1 or 2.

**13.** The system according to Claim 12, wherein each of said input EG (EGi) is operative to cooperate with an input FIFO (FIFOi) adapted to store data inputted at the bit rate Rli, while the corresponding EGi is capable of creating enabling/disabling signals to form a pair (i) of internal streams by:

a) reading the FIFOi at the bit rate R2 thus creating an internal data stream having the bit rate R2, and

b) transmitting an internal stream of the enabling/disabling signals in parallel with the internal data stream;

the system being also **characterized in that**, at least one of said pairs of internal streams, upon being handled in the system, is finally utilized at a corresponding output for creating the corresponding outgoing data stream at the bit rate Rli or a bit rate derived therefrom.

FIG.1A

FIG.1B

EG   (n=9;  m=5;  $S_0$=2)

| CLOCK | S | S+m | E | S' |
|-------|---|-----|---|-----|
| 1 | 2 | 7 | 0 | 7 |
| 2 | 7 | 12 | 1 | 3 |
| 3 | 3 | 8 | 0 | 8 |
| 4 | 8 | 13 | 1 | 4 |
| 5 | 4 | 9 | 1 | 0 |
| 6 | 0 | 5 | 0 | 5 |
| 7 | 5 | 10 | 1 | 1 |
| 8 | 1 | 6 | 0 | 6 |
| 9 | 6 | 11 | 1 | 2 |
| 10 | 2 | | | |

FIG.1C

10

EG2 26

m
n

R2 ENABLE READ

S

R2

OHSW 24

R2

FIFO 28

R1

Rx 30

27

R2

EG1 12

m
n

R2 ENABLE WRITE

S

OHSR 22

R2

FIFO 20

R1

Tx 18

25

OH

S

15

14

16

FIG.2

FIG.3

EP 1 376 966 A2

FIG.4

FIG.5